# EUROPÄISCHE PATENTANMELDUNG

(11) **EP 2 011 449 A1**
(43) Veröffentlichungstag der Anmeldung: **07.01.2009**
(21) Anmeldenummer: 08159470.7
(22) Anmeldetag: 02.07.2008
(51) Int. Cl.: A61C 13/00, G01B 11/25

(54) **Vermessungseinrichtung und Verfahren zur 3D-Vermessung von Zahnmodellen**

(30) Priorität: 02.07.2007 DE 102007030768
(71) Anmelder: Sirona Dental Systems GmbH, 64625 Bensheim (DE)
(72) Erfinder: Eiff, Wolfgang, 64646, Heppenheim (DE); Fornoff, Peter, 64385, Reichelsheim 3 (DE)
(74) Vertreter: Sommer, Peter

(57) **Zusammenfassung**

Vermessungseinrichtung 1 zur 3D-Vermessung von Zahnmodellen 2 aus einer Vermessungsrichtung V, aufweisend eine Haltevorrichtung 3 für ein Ganzkiefer-Zahnmodell 2, wobei das Ganzkiefer-Zahnmodell 2 über einen linienförmigen Kieferbogen 2.2 eine Okklusionsebene E aufspannt, weiterhin aufweisend einen Grundkörper 3.1, ein eine rechtwinklig zur Vermessungsrichtung V verlaufende Schwenkachse 3.4 aufweisendes Schwenklager 3.3 und eine bezüglich des Grundkörpers 3.1 über das Schwenklager 3.3 schwenkbar angeordnete Aufnahme 3.2, an der das zu vermessende Zahnmodell 2 angeordnet ist, wobei die Aufnahme 3.2 relativ zum Grundkörper 3.1 in einem Winkelbereich δ von mindestens 150° um die Schwenkachse 3.4 schwenkbar gelagert ist, wobei das Ganzkiefer-Zahnmodell 2 so anbringbar ist, dass die Okklusionsebene E parallel zur Vermessungsrichtung V liegt, und dass eine Drehachse 2.1 des Ganzkiefer-Zahnmodells 2 koaxial zur Schwenkachse 3.4 des Schwenklagers 3.3 und rechtwinklig zur Okklusionsebene E verläuft.

## Beschreibung

### Technisches Gebiet

Die Erfindung betrifft eine Vermessungseinrichtung zur 3D-Vermessung von Zahnmodellen aus einer Vermessungsrichtung V, aufweisend eine Haltevorrichtung für ein Ganzkiefer-Zahnmodell, wobei das Ganzkiefer-Zahnmodell über einen linienförmigen Zahn- bzw. Kieferbogen eine Okklusionsebene E aufspannt, weiterhin aufweisend einen Grundkörper, ein eine rechtwinklig zur Vermessungsrichtung V verlaufende Schwenkachse aufweisendes Schwenklager und eine bezüglich des Grundkörpers über das Schwenklager schwenkbar angeordnete Aufnahme, an der das zu vermessende Zahnmodell anbringbar ist.

Die Erfindung betrifft weiterhin ein Verfahren zur 3D-Vermessung von Zahnmodellen aus einer Vermessungsrichtung V entlang einer Z-Achse, bei dem ein zu vermessendes Ganzkiefer-Zahnmodell an einer eine rechtwinklig zur Vermessungsrichtung V verlaufende Schwenkachse aufweisenden Aufnahme befestigt wird und das zu vermessende Ganzkiefer-Zahnmodell von einem Messaufnehmer in mehreren Aufnahmen erfasst wird und zur Erstellung eines 3D-Datensatzes des Zahnmodells eine Berechnung durch eine Auswerteeinheit vorgenommen wird.

### Stand der Technik

Es ist eine Vermessungseinrichtung zur 3D-Vermessung von Zahnmodellen aus der DE 10 2004 054 876 B3 bekannt. Diese weist eine Aufnahmevorrichtung und eine Positionierungseinrichtung auf, wobei die Positionierungseinrichtung eine bezüglich der Aufnahmevorrichtung positionierbare Platte aufweist, auf der das zu vermessende Zahnmodell befestigbar ist, und eine bezüglich der Aufnahmevorrichtung feststehende Grundplatte vorgesehen ist, wobei die Verschiebeplatte erste Rastmittel enthält und die Grundplatte als Rastplatte ausgeführt ist und wobei an der Rastplatte zweite Rastmittel vorgesehen sind, die mit den ersten Rastmitteln so zusammenwirken, dass die Verschiebeplatte eine von mehreren vorgegebenen Positionen zur Rastplatte einnehmen kann und in der ausgewählten Position einrastet.

Aus der EP 0 913 130 A2 ist eine Vermessungseinrichtung zur 3D-Vermessung von Ganzkiefer-Zahnmodellen bekannt, die eine Einspannvorrichtung für das Zahnmodell aufweist, wobei die Einspannvorrichtung um eine Schwenkachse schwenkbar ist. Die Schwenkachse ist dabei parallel zu einer Ebene bzw. einer Verschwenkplatte des Ganzkiefermodells angeordnet.

Die Aufgabe der Erfindung besteht darin, eine Vermessungseinrichtung derart auszubilden und anzuordnen und ein Vermessungsverfahren derart auszubilden, dass eine präzisere und schnellere Vermessung eines Ganzkiefer-Zahnmodells gewährleistet ist.

### Darstellung der Erfindung

Gemäß der Erfindung ist vorrichtungsseitig vorgesehen, dass die Aufnahme relativ zum Grundkörper in einem Winkelbereich δ von mindestens 150° um die Schwenkachse schwenkbar gelagert ist, wobei das Ganzkiefer-Zahnmodell so anbringbar ist, dass die Okklusionsebene E parallel zur Vermessungsrichtung V liegt, und dass eine Drehachse des Ganzkiefer-Zahnmodells koaxial zur Schwenkachse des Schwenklagers und rechtwinklig zur Okklusionsebene E verläuft. Dem Ganzkiefer-Zahnmodell ist ein dem Kieferbogen nach ausgerichteter, koaxial zur Drehachse angeordneter Messkreis K derart zugeordnet, dass ein radialer Abstand dr zwischen einer bukkalen Zahnaußenfläche ZA und dem Messkreis K kleiner ist als die Tiefenschärfe T. Der Zahn- bzw. Kieferbogen stellt für sich eine in etwa halb-elliptische bzw. halbovale Grundform dar, auf der sich die Zähne des Ganzkiefer-Zahnmodells befinden. In diesen vorgegebenen Kieferbogen lässt sich erfindungsgemäß ein Messkreis K derart platzieren, dass die bukkalen bzw. labialen Zahnaußenflächen des Ganzkiefer-Zahnmodells bezüglich des angeordneten Messkreises einen möglichst geringen Abstand bzw. insbesondere einen maximalen Abstand aufweisen, der unter Berücksichtigung der vorhandenen Tiefenschärfe T eine ganzheitliche Vermessung des Ganzkiefer-Zahnmodells gewährleistet. Somit ist bei der Verschwenkung des Ganzkiefer-Zahnmodells um die Dreh- bzw. Schwenkachse stets gewährleistet, dass sich die aufzunehmenden Zahnaußenflächen im Tiefenschärfenbereich T der Optik befinden.

Vorteilhaft ist es hierbei, dass das Schwenklager Positioniermittel aufweisen kann, die bezüglich der Rotation des Schwenklagers um die Schwenkachse mehrere vordefinierte Winkelpositionen W1, W2 der Haltevorrichtung gewährleisten. Durch den Einsatz mehrerer vordefinierter Winkelpositionen wie W1, W2 kann die insgesamt anfallende Anzahl der Aufnahmen für das Ganzkiefermodell auf ein Minimum beschränkt werden, sofern die jeweiligen Winkelpositionen an das zur Verfügung stehende Vermessungsfenster angepasst sind. Die Aufnahme kann relativ zum Grundkörper in einem Winkelbereich δ von mindestens 150° um die Schwenkachse schwenkbar gelagert sein, wobei das Schwenklager Positioniermittel aufweisen kann die bezüglich der Rotation des Schwenklagers um die Schwenkachse mehrere vordefinierte Winkelpositionen W1, W2 der Haltevorrichtung gewährleisten. Die vorstehend genannten Vorteile werden hiermit ebenfalls erreicht.

Zudem ist es von Vorteil, dass ein Messaufnehmer mit einer optischen Achse vorgesehen sein kann, der ein Messfeld in einer Vermessungsrichtung V generiert, wobei die optische Achse und/oder die Vermessungsrichtung V parallel, vorzugsweise vertikal ausgerichtet sind. Durch die Ausrichtung und Anordnung des Messaufnehmers ist eine optimale Erfassung der bukkalen bzw. radialen Außenflächen der Zähne des Ganzkiefer-Zahnmodells gewährleistet.

Daneben ist es vorteilhaft, dass der Abstand zwischen dem Messaufnehmer und dem Schwenklager zumindest in Richtung der Z-Achse einstellbar sein kann. Je nach Tiefenschärfe der verwendeten Messoptik ist die Einstellung des Abstandes zwischen dem Messaufnehmer und dem Schwenklager bzw. zwischen dem Messaufnehmer und den vorstehend genannten Zahnaußenflächen zwecks Berücksichtigung der Tiefenschärfe einerseits sowie die Berücksichtigung der verschiedenen Modellgrößen andererseits möglich.

In diesem Zusammenhang ist es von Vorteil, dass der Messaufnehmer eine telezentrische Optik mit einem Bilderfassungsbereich einer Länge L und einer Breite B und einer Tiefenschärfe T aufweisen kann. Insbesondere die Breite B des Bilderfassungsbereichs bestimmt die Anzahl der Zähne des aufzunehmenden Teils des Ganzkiefermodells und damit die Anzahl der Aufnahmen, die notwendig sind, das ganze Ganzkiefer-Zahnmodell zu erfassen. Bei einer ausreichend großen Tiefenschärfe bzw. einer geeigneten Platzierung des Ganzkiefer-Zahnmodells während der Verschwenkbewegung sind alle Aufnahmen für das Ganzkiefer-Zahnmodell ohne vorstehend beschriebene Einstellung des Abstandes zwischen dem Messaufnehmer und dem Schwenklager möglich.

Ebenso ist es von Vorteil, dass ein Schwenkwinkel α zwischen zwei Winkelpositionen W1, W2 zwischen 20° und 40° groß sein kann. Die Größe des Schwenkwinkels α zwischen zwei Winkelpositionen W1, W2 ist insbesondere an die Breite des zur Verfügung stehenden Messfensters bzw. Bilderfassungsbereichs derart anzupassen, dass eine möglichst geringe Anzahl von Aufnahmen für eine umfassende Aufnahme des Ganzkiefer-Zahnmodells notwendig ist.

Vorteilhaft ist auch, dass ein dem Schwenkwinkel α entsprechendes Bogenmaß S des Messkreises K maximal so groß sein kann wie die Breite B des Bilderfassungsbereichs und größer sein kann als die halbe Breite B des Bilderfassungsbereichs. Der Schwenkwinkel α sollte derart ausgebildet sein, dass sich bei benachbarten Bildaufnahmen eine Überlappung des Bildaufnahmenbereichs derart ergibt, dass bei der nachfolgenden Bildzusammenstellung eine Ausrichtung benachbarter Aufnahmen anhand dieses Überlappungsbereiches relativ zueinander möglich ist.

Zudem ist es von Vorteil, dass der Schwenkwinkel α so gewählt sein kann, dass in benachbarten Winkelpositionen W1, W2 aufgenommene Bildbereiche D1, D2 einen Überlappungsbereich O aufweisen, der mindestens 1/10 der Breite B des Bilderfassungsbereichs beträgt. Bei der Größe des Überlappungsbereichs O von 1/10 der Breite des Bilderfassungsbereiches ist vorgenannte relative Ausrichtung benachbarter Aufnahmen gewährleistet. Zudem sind insgesamt ausreichend wenig Aufnahmen notwendig, um das Ganzkiefer-Zahnmodell bzw. alle Zahnaußenflächen aufzunehmen.

Daneben ist es vorteilhaft, dass eine Auswerteeinheit vorgesehen sein kann, die auf der Grundlage von mindestens zwei Aufnahmen eine Berechnung eines 3D-Datensatzes vornimmt. Auf Grundlage des berechneten 3D-Datensatzes der Auswerteeinheit ist eine schnelle Ermittlung der Positionen bzw. der Ausrichtung der anzuordnenden Brackets gewährleistet.

Bei dem erfindungsgemäßen Verfahren zur 3D-Vermessung von Zahnmodellen aus einer Vermessungsrichtung V entlang einer Z-Achse, bei dem ein zu vermessendes Ganzkiefer-Zahnmodell an einer, in einer X-Y-Ebene liegende Schwenkachse aufweisenden Aufnahme befestigt wird und das zu vermessende Ganzkiefer-Zahnmodell von einem Messaufnehmer in mehreren Aufnahmen erfasst wird und zur Erstellung eines 3D-Datensatzes des Zahnmodells eine Berechnung durch eine Auswerteeinheit vorgenommen wird, wird
a) eine Positionierung des Ganzkiefer-Zahnmodells durchgeführt, in dem ein den bukkalen Zahnaußenflächen ZA nach ausgerichteter Messkreis K mit einem Mittelpunkt M derart bestimmt wird, dass ein radialer Abstand dr zwischen dem Messkreis K und einer bukkalen Zahnaußenfläche ZA maximal so groß ist wie die Tiefenschärfe T des Messaufnehmers,
b) eine erste Aufnahme des zu vermessenden Zahnmodells an einer durch Positioniermittel bestimmten Winkelposition W1 der schwenkbaren Aufnahme erstellt,
c) das Ganzkiefer-Zahnmodell um die rechtwinklig zu einer über einen linienförmigen Zahn- bzw. Kieferbogen aufgespannten Okklusionsebene E angeordnete Schwenkachse des Ganzkiefer-Zahnmodells um einen Schwenkwinkel α in mindestens eine weitere durch die Positioniermittel vorgegebene Winkelposition W2 verschwenkt und eine weitere Aufnahme erstellt und
d) ein 3D-Datensatz durch Auswertung der aus mindestens zwei unterschiedlichen, genau vorgegebenen Winkelpositionen W1, W2 erstellten Aufnahmen erstellt.

Hierdurch wird erreicht, dass nicht einzelne Teile des Zahnmodells für sich zwecks Erstellung eines Ganzkieferdatensatzes vermessen werden müssen, sondern das ganze Kiefermodell als Ganzes. Insbesondere die bukkalen bzw. labialen Zahnaußenflächen werden aus einer im Wesentlichen normalen Richtung erfasst, so dass deren Vermessung insbesondere unter Berücksichtigung der dort angeordneten bzw. anzuordnenden Brackets zur Korrektur der Zahnstellung optimal erfolgen kann. Die Schwenkachse des Schwenklagers ist dabei vorzugsweise rechtwinklig zur Vermessungsrichtung V angeordnet, so dass sich vorgenannte Zahnaußenflächen optimal erfassen lassen. Es ist auch möglich, die Schwenkachse abweichend hiervon anzuordnen. Dies führt jedoch zu einer bezüglich der Vermessungsrichtung taumelnden Drehbewegung des Ganzkiefer-Zahnmodells, was wiederum die Notwendigkeit eines ausreichend großen Bilderfassungsbereichs mit sich bringt.

Ferner ist es von Vorteil, dass die Drehachse des Ganzkiefer-Zahnmodells in den Mittelpunkt M gelegt werden kann, wobei die Schwenkachse des Schwenklagers koaxial zu der Drehachse ausgerichtet wird.

Daneben ist es vorteilhaft, dass der Abstand zwischen dem Messaufnehmer und dem Schwenklager und/oder dem Messkreis K unter Berücksichtigung der Tiefenschärfe T der Optik und unter Berücksichtigung der Größe des Ganzkiefer-Zahnmodells zumindest für eine Winkelposition W1, W2 eingestellt werden kann.

Zudem ist es von Vorteil, dass der Auswerteeinheit der Winkel α zwischen den Winkelpositionen W1, W2 des Schwenklagers bekannt sein kann und die Auswerteeinheit die Aufnahmen unter Berücksichtigung einer durch den Schwenkwinkel α begründeten Überlappung des Bilderfassungsbereichs zusammenfügen kann.

Schließlich ist es von Vorteil, dass die Auswerteeinheit zur relativen Lagebestimmung der Aufnahmen zueinander die Einzelaufnahmen miteinander in einem Überlappungsbereich O der Aufnahmen vergleichen kann und dass die Einzelaufnahmen zu einem gemeinsamen Datensatz zusammengesetzt werden können.

### Kurze Beschreibung der Zeichnung

In den Zeichnungen sind Ausführungsbeispiele der Erfindung dargestellt. Es zeigt die:
- Fig. 1a: eine Prinzipskizze der Vermessungseinrichtung mit schwenkbar angeordnetem Ganzkiefer-Zahnmodell;
- Fig. 1b: eine Seitenansicht gemäß Fig. 1a;
- Fig. 2: die Vermessungseinrichtung nach Fig. 1 mit verschwenkt angeordnetem Ganzkiefer-Zahnmodell.

### Ausführungsbeispiel

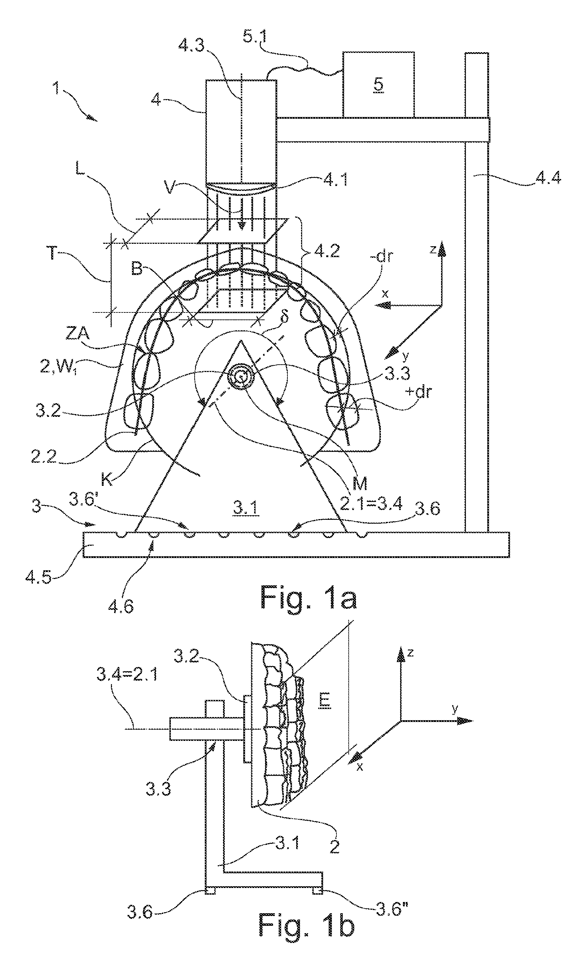

Eine in Fig. 1 dargestellte Vermessungseinrichtung 1 weist einen Grundkörper 3.1 mit einer schwenkbar angeordneten Aufnahme 3.2 auf. Die Aufnahme 3.2 dient der Aufnahme eines Ganzkiefer-Zahnmodells 2 und weist ein Schwenklager 3.3 mit einer Schwenkachse 3.4 auf. Die Schwenkachse 3.4 ist dabei parallel zu einer Y-Achse angeordnet.

Der Grundkörper 3.1 mit der Aufnahme 3.2 ist auf einer in einer X-Y-Ebene angeordneten Grundplatte 4.5 angeordnet. Zwecks Ausrichtung der relativen Lage zwischen dem Grundkörper 3.1 und der Grundplatte 4.5 weist der Grundkörper 3.1 mehrere Rastnasen 3.6, 3.6' auf, die in entsprechend angeordnete Rastnuten 4.6 der Grundplatte 4.5 eingreifen. Die Rastnuten 4.6 weisen einen festen regelmäßigen Abstand zueinander auf, womit gemäß Fig. 1a der Grundkörper 3.1 in Richtung einer X-Achse nach rechts und nach links in vordefinierten Positionen relativ zur Grundplatte 4.5 ausrichtbar ist.

Gemäß Fig. 1b weist der Grundkörper 3.1 mindestens eine weitere Rastnase 3.6" auf, die mit Bezug auf eine Y-Achse nach hinten versetzt angeordnet ist und somit die statische Bestimmtheit des Grundkörpers 3.1 gewährleistet. Zwecks Vermessung des Ganzkiefer-Zahnmodells 2 gemäß Fig. 1a ist ein Messaufnehmer 4 vorgesehen, der über ein Stativ 4.4 unmittelbar oberhalb des Ganzkiefer-Zahnmodells 2 bzw. oberhalb der Schwenkachse 3.4 platzierbar ist. Eine Einstellung des Abstandes zwischen dem Messaufnehmer 4 und dem Ganzkiefer-Zahnmodell 2 in Richtung einer Z-Achse ist über nicht weiter dargestellte Getriebemittel des Stativs 4.4 gewährleistet. Der Messaufnehmer 4 ist über eine Datenleitung 5.1 mit einer Auswerteeinheit 5 zur Auswertung der erfassten Bilddaten verbunden. Der Messaufnehmer 4 weist eine parallel zu der Z-Achse verlaufende optische Achse 4.3 sowie eine parallel zur optischen Achse 4.3 angeordnete Vermessungsrichtung V auf. In diese Vermessungsrichtung V generiert der Messaufnehmer 4 einen Bilderfassungsbereich 4.2 mit einer Breite B, einer Länge L sowie mit einem Tiefenschärfebereich T. Der Messaufnehmer 4 ist derart oberhalb bzw. in eine Richtung Z versetzt über dem Ganzkiefer-Zahnmodell 2 angeordnet, dass der zu vermessende Teil des Ganzkiefer-Zahnmodells 2 innerhalb des vorstehend definierten Bilderfassungsbereichs 4.2 angeordnet ist. Zwecks Platzierung und Ausrichtung des Ganzkiefer-Zahnmodells 2 ist diesem ein Messkreis K zugeordnet, der einem linienförmigen Zahn- bzw. Kieferbogen 2.2 nach ausgerichtet ist. Die Ausrichtung des vorgenannten Messkreises K zum Kieferbogen 2.2 erfolgt dabei derart, dass radiale Abstände dr zwischen den Zahnaußenflächen ZA und dem Messkreis K möglichst klein sind. Gemäß Fig. 1a weist der fünfte Zahn auf der rechten Seite den Abstand (-dr) zum Messkreis K auf, wohingegen der siebte Zahn auf der rechten Seite den Abstand (+dr) zum Messkreis K aufweist. Der Messkreis K ist dabei in seinem Durchmesser so zu wählen, dass vorgenannte Abstände (-dr, +dr) zu den jeweiligen Zahnaußenflächen ZA innerhalb des Tiefenschärfebereichs T des Messaufnehmers 4 angeordnet sind, so dass das komplette Ganzkiefer-Zahnmodell 2 durch Verschwenkung des Zahnmodells um die Schwenkachse 3.4 gewährleistet ist. Die Einstellung des Abstandes zwischen dem Messaufnehmer 4 und dem Ganzkiefer-Zahnmodell 2 in Richtung der Z-Achse ist über die nicht weiter dargestellten Getriebemittel des Stativs 4.4 gewährleistet, so dass der Messkreis K bzw. sein Mittelpunkt unter Berücksichtigung vorgenannter Abstände (-dr, +dr) innerhalb des Tiefenschärfebereichs T, vorzugsweise in der Mitte des Tiefenschärfebereichs T platzierbar ist. Das Ganzkiefer-Zahnmodell 2 bzw. der Mittelpunkt M des Messkreises K sind dabei koaxial zur Schwenkachse 3.4 bzw. koaxial zu einer Drehachse 2.1 des Ganzkiefer-Zahnmodells 2 angeordnet. Gemäß Fig. 1a befindet sich das Ganzkiefer-Zahnmodell 2 in einer Position W1 bezüglich seiner Verschwenkung um die Drehachse 2.1.

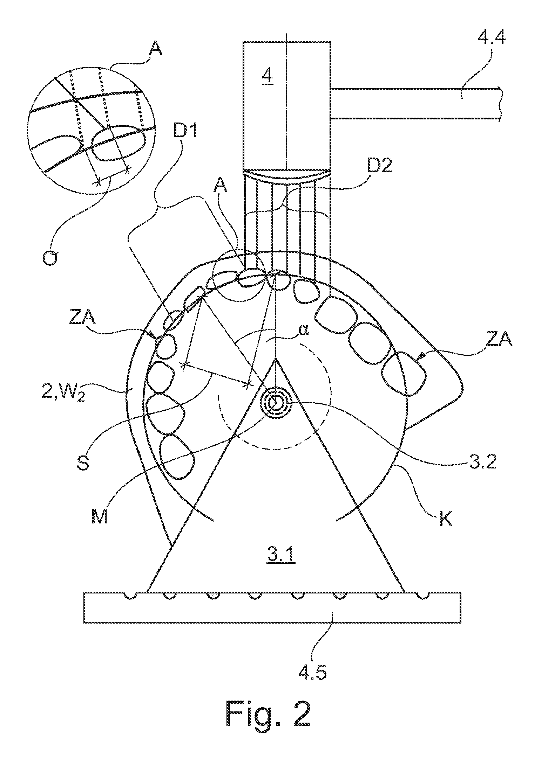

Gemäß Fig. 2 ist das Ganzkiefer-Zahnmodell 2 um einen Schwenkwinkel α nach links in eine Position W2 verschwenkt dargestellt. Über den Messaufnehmer 4 bzw. den Bilderfassungsbereich 4.2 wird nunmehr abweichend von einem gemäß Fig. 1a aufgenommenen Bildbereich D1 ein Bildbereich D2 der benachbarten Zähne des Ganzkiefer-Zahnmodells 2 bzw. deren Außenflächen ZA aufgenommen. Die beiden Bildbereiche D1 und D2 weisen dabei einen Überlappungsbereich O gemäß vergrö-βertem Bildausschnitt A auf. Der Überlappungsbereich O ergibt sich dabei aus dem Verhältnis der Breite des Bilderfassungsbereichs 4.2 zu einem aufgrund des Schwenkwinkels α aufgrund der Verschwenkung von der Position W1 in die Position W2 abgewickelten Bogenmaß S.

Die Drehachse 2.1 des Ganzkiefer-Zahnmodells 2 und die Schwenkachse 3.4 sind koaxial zueinander angeordnet, wobei der Mittelpunkt M des Messkreises K ebenfalls in den beiden vorgenannten Achsen liegt. Demnach ist der Abstand dr zwischen dem Messkreis K und dem Messaufnehmer 4 konstant. Die bukkalen bzw. labialen Zahnaußenflächen ZA weisen einen vorbekannten Abstand dr gemäß Fig. 1a zum Messkreis K auf, so dass unter Berücksichtigung des zur Verfügung stehenden Tiefenschärfebereichs T des Messaufnehmers 4 alle aufzunehmenden Zahnaußenflächen ZA innerhalb des Tiefenschärfebereichs T während der gesamten Verschwenkung um einen Winkelbereich δ gemäß Fig. 1a gewährleistet sind.

Gemäß Fig. 1b spannen Okklusionsflächen der jeweiligen Zähne des Ganzkiefer-Zahnmodells 2 eine Okklusionsebene E auf, die erfindungsgemäß rechtwinklig zur Schwenkachse 3.4 des Schwenklagers 3.3 und parallel zur Vermessungsrichtung V angeordnet ist.

### Bezugszeichen

- 1: Vermessungseinrichtung
- 2: Zahnmodell, Ganzkiefer-Zahnmodell
- 2.1: Drehachse
- 2.2: Zahn-/Kieferbogen
- 3: Haltevorrichtung
- 3.1: Grundkörper
- 3.2: Aufnahme
- 3.3: Schwenklager
- 3.4: Schwenkachse
- 3.6: Rastnase
- 3.6': Rastnase
- 3.6": Rastnase
- 4: Messaufnehmer
- 4.1: Optik
- 4.2: Bilderfassungsbereich
- 4.3: optische Achse
- 4.4: Stativ
- 4.5: Grundplatte
- 4.6: Rastnuten
- 5: Auswerteeinheit
- 5.1: Datenleitung
- α: Schwenkwinkel
- δ: Winkelbereich
- A: Bildausschnitt
- B: Breite des Bilderfassungsbereichs
- D1: Bildbereich
- D2: Bildbereich
- dr: Abstand
- E: Okklusionsebene
- K: Messkreis
- L: Länge des Bilderfassungsbereichs
- M: Mittelpunkt
- O: Überlappungsbereich
- S: Bogenmaß
- T: Tiefenschärfebereich
- V: Vermessungsrichtung
- W1: Winkelposition
- W2: Winkelposition
- X: Richtung
- Y: Richtung
- Z: Richtung
- ZA: Zahnaußenflächen

## Patentansprüche

1. Vermessungseinrichtung (1) zur 3D-Vermessung von Zahnmodellen (2) aus einer Vermessungsrichtung V, aufweisend eine Haltevorrichtung (3) für ein Ganzkiefer-Zahnmodell (2), wobei das Ganzkiefer-Zahnmodell (2) über einen linienförmigen Kieferbogen (2.2) eine Okklusionsebene E aufspannt, weiterhin aufweisend einen Grundkörper (3.1), ein eine rechtwinklig zur Vermessungsrichtung V verlaufende Schwenkachse (3.4) aufweisendes Schwenklager (3.3) und eine bezüglich des Grundkörpers (3.1) über das Schwenklager (3.3) schwenkbar angeordnete Aufnahme (3.2), an der das zu vermessende Zahnmodell (2) anbringbar ist, **dadurch gekennzeichnet, dass** die Aufnahme (3.2) relativ zum Grundkörper (3.1) in einem Winkelbereich δ von mindestens 150° um die Schwenkachse (3.4) schwenkbar gelagert ist, wobei das Ganzkiefer-Zahnmodell (2) so anbringbar ist, dass die Okklusionsebene E parallel zur Vermessungsrichtung V liegt, und dass eine Drehachse (2.1) des Ganzkiefer-Zahnmodells (2) koaxial zur Schwenkachse (3.4) des Schwenklagers (3.3) und rechtwinklig zur Okklusionsebene E verläuft, wobei dem Ganzkiefer-Zahnmodell (2) ein dem Kieferbogen (2.2) nach ausgerichteter, koaxial zur Drehachse (2.1) angeordneter Messkreis K derart zugeordnet ist, dass ein radialer Abstand dr zwischen einer bukkalen Zahnaußenfläche ZA und dem Messkreis K kleiner ist als die Tiefenschärfe T.

2. Vermessungseinrichtung (1) nach Anspruch 1, **dadurch gekennzeichnet, dass** das Schwenklager (3.3) Positioniermittel aufweist, die bezüglich der Rotation des Schwenklagers (3.3) um die Schwenkachse (3.4) mehrere vordefinierte Winkelpositionen W1, W2 der Haltevorrichtung (3) gewährleisten.

3. Vermessungseinrichtung (1) nach Anspruch 1 oder 2, **dadurch gekennzeichnet, dass** ein Messaufnehmer (4) mit einer optischen Achse (4.3) vorgesehen ist, der ein Messfeld in einer Vermessungsrichtung V generiert, wobei die optische Achse (4.3) und/oder die Vermessungsrichtung V parallel ausgerichtet sind.

4. Vermessungseinrichtung (1) nach Anspruch 3, **dadurch gekennzeichnet, dass** der Abstand zwischen dem Messaufnehmer (4) und dem Schwenklager (3.3) zumindest in Richtung der Z-Achse einstellbar ist.

5. Vermessungseinrichtung (1) nach Anspruch 3 oder 4, **dadurch gekennzeichnet, dass** der Messaufnehmer (4) eine telezentrische Optik (4.1) mit einem Bilderfassungsbereich (4.2) einer Länge L und einer Breite B und einer Tiefenschärfe T aufweist.

6. Vermessungseinrichtung (1) nach einem der Ansprüche 2 bis 5, **dadurch gekennzeichnet, dass** ein Schwenkwinkel α zwischen zwei Winkelpositionen W1, W2 zwischen 20° und 40° groß ist.

7. Vermessungseinrichtung (1) nach einem der Ansprüche 2 bis 6, **dadurch gekennzeichnet, dass** ein dem Schwenkwinkel α entsprechendes Bogenmaß S des Messkreises K maximal so groß ist wie die Breite B des Bilderfassungsbereichs (4.2) und größer ist als die halbe Breite B des Bilderfassungsbereichs (4.2).

8. Vermessungseinrichtung (1) nach einem der Ansprüche 2 bis 7, **dadurch gekennzeichnet, dass** der Schwenkwinkel α so gewählt ist, dass in benachbarten Winkelpositionen W1, W2 aufgenommene Bildbereiche D1, D2 einen Überlappungsbereich O aufweisen, der mindestens 1/10 der Breite B des Bilderfassungsbereichs (4.2) beträgt.

9. Vermessungseinrichtung (1) nach einem der Ansprüche 1 bis 8, **dadurch gekennzeichnet, dass** eine Auswerteeinheit (5) vorgesehen ist, die auf der Grundlage von mindestens zwei Aufnahmen eine Berechnung eines 3D-Datensatzes vornimmt.

10. Verfahren zur 3D-Vermessung von Zahnmodellen (2) aus einer Vermessungsrichtung V entlang einer Z-Achse, bei dem ein zu vermessendes Ganzkiefer-Zahnmodell (2) an einer eine rechtwinklig zur Vermessungsrichtung V verlaufende Schwenkachse (3.4) aufweisenden Aufnahme (3.2) befestigt wird und das zu vermessende Ganzkiefer-Zahnmodell (2) von einem Messaufnehmer (4) in mehreren Aufnahmen erfasst wird und zur Erstellung eines 3D-Datensatzes des Zahnmodells (2) eine Berechnung durch eine Auswerteeinheit (5) vorgenommen wird, **gekennzeichnet durch** folgende Schritte:
a) Positionierung des Ganzkiefer-Zahnmodells (2) indem ein den bukkalen Zahnaußenflächen ZA nach ausgerichteter Messkreis K mit einem Mittelpunkt M derart bestimmt wird, dass ein radialer Abstand dr zwischen dem Messkreis K und einer bukkalen Zahnaußenfläche ZA maximal so groß ist wie die Tiefenschärfe T des Messaufnehmers (4),
b) die Erstellung einer ersten Aufnahme des zu vermessenden Zahnmodells (2) an einer **durch** Positioniermittel bestimmten Winkelposition W1 der schwenkbaren Aufnahme (3.2),
c) die Verschwenkung des Ganzkiefer-Zahnmodells (2) um die rechtwinklig zu einer über einen linienförmigen Kieferbogen (2.2) aufgespannten Okklusionsebene E angeordnete Schwenkachse (3.4) des Ganzkiefer-Zahnmodells (2) um einen Schwenkwinkel α in mindestens eine weitere **durch** die Positioniermittel vorgegebene Winkelposition W2 und die Erstellung einer weiteren Aufnahme und
d) die Erstellung eines 3D-Datensatzes **durch** Auswertung der aus mindestens zwei unterschiedlichen, genau vorgegebenen Winkelpositionen W1, W2 erstellten Aufnahmen.

11. Verfahren nach Anspruch 10, **dadurch gekennzeichnet, dass** die Drehachse (2.1) des Ganzkiefer-Zahnmodells (2) in den Mittelpunkt M gelegt wird, wobei die Schwenkachse (3.4) des Schwenklagers (3.3) koaxial zu der Drehachse (2.1) ausgerichtet wird.

12. Verfahren nach einem der Ansprüche 10 bis 11, **dadurch gekennzeichnet, dass** der Abstand zwischen dem Messaufnehmer (4) und dem Schwenklager (3.3) und/oder dem Messkreis K unter Berücksichtigung der Tiefenschärfe T der Optik (4.1) und unter Berücksichtigung der Größe des Ganzkiefer-Zahnmodells (2) zumindest für eine Winkelposition W1, W2 eingestellt wird.

13. Verfahren nach einem der Ansprüche 10 bis 12, **dadurch gekennzeichnet, dass** der Auswerteeinheit (5) der Winkel α zwischen den Winkelpositionen W1, W2 des Schwenklagers (3.3) bekannt ist und die Auswerteeinheit (5) die Aufnahmen unter Berücksichtigung einer durch den Schwenkwinkel α begründeten Überlappung des Bilderfassungsbereichs (4.2) zusammenfügt.

14. Verfahren nach einem der Ansprüche 10 bis 13, **dadurch gekennzeichnet, dass** die Auswerteeinheit (5) zur relativen Lagebestimmung der Aufnahmen zueinander die Einzelaufnahmen miteinander in einem Überlappungsbereich O der Aufnahmen vergleicht.

15. Verfahren nach einem der Ansprüche 10 bis 14, **dadurch gekennzeichnet, dass** die Einzelaufnahmen zu einem gemeinsamen Datensatz zusammengesetzt werden.
